# EUROPEAN PATENT APPLICATION

(11) **EP 3 909 893 A1**
(43) Date of publication of application: **17.11.2021**
(21) Application number: 20305490.3
(22) Date of filing: 13.05.2020
(51) Int. Cl.: B65G 61/00, B25J 15/00, B25J 15/02, B25J 15/06, B25J 15/12

(54) **SYSTEM AND METHOD FOR PICKING UP ICE CREAM CONES**

(71) Applicant: Flexlink AB, 415 50 Göteborg (SE)
(72) Inventor: FUSY, Bastien, 38460 SICCIEU (FR)
(74) Representative: Lavoix

(57) **Abstract**

A gripping head adapted to pick up an ice cream cone stack from a container, where the gripping head is provided with at least one pick-up finger and a vacuum cup, where a tip of the pick-up finger is adapted to extend into an ice cream cone in a pick-up position, and where the vacuum cup is adapted to hold the first ice cream cone of the ice cream cone stack when the pick-up finger extends into an ice cream cone. The advantage of the invention is that a stack of ice cream cones can be picked up and moved in a reliably manner.

## Description

### TECHNICAL FIELD

The present invention relates to a method and a system for picking up and moving a stack of ice cream cones from a container to a receiving position.

### BACKGROUND ART

Robots are often used for loading and unloading operations in the industry. Various types of products and objects can be handled by a robot. The products may be regular or irregular, and the size of an object may vary considerably. The robots can assemble products or they can be used to move the products. One common use for a robot is to move objects from a delivery container comprising a plurality of products to a magazine or an infeed position at e.g. a conveyor or a production station, where the objects are used one by one for a final manufactured product.

The objects that are moved from the container may have different shapes and sizes, and may be arranged randomly or arranged in more or less well-defined rows and columns. Some objects are easy to pick up from the container by a gripping head comprising vacuum cups, such as flat objects. Some objects may be gripped by arms of a gripping head, such as rigid objects. Some objects, such as irregular and/or fragile objects, are normally handled manually in order to prevent damage of the objects. Ice cream cones is an example of such an object.

US3619216A discloses a transport solution for empty ice cream cone, where each ice cream cone is stored and supported in individual openings in filler sheets, where the filler sheets are arranged with a distance to each other with the ice cream cones extending into each other. In this solution, the ice cream cones do not touch each other and the ice cream cones can be handled individually without the risk of breaking or damaging the ice cream cones.

US4826012A discloses another way of packing empty ice cream cones where multiple stacks of cones are supported by a retainer sheet with an array of holes in a package.

US4349571A discloses a bulk package for stacked and nested ice cream cones for transporting and dispensing the cones in which a plurality of folded foam sandwich structures holds one cone stack in an outer container.

However, even if the ice cream cones can be transported safely with these solutions, the unpacking of the ice cream cones is still complicated any will require manual handling. There is thus room for a gripping device for handling stacks of ice cream cones.

### DISCLOSURE OF INVENTION

An object of the invention is therefore to provide a gripping head adapted to grip a stack of ice cream cones. Another object of the invention is to provide a system for gripping stacks of ice cream cones. A further object of the invention is to provide a method for moving stacks of ice cream cones from a container to a receiving position.

The solution to the problem according to the invention is described in the characterizing part of claim 1 with regard to the gripping head, in claim 10 regarding the system, and in claim 11 regarding the method. The other claims contain advantageous embodiments and further developments of the gripping head and method.

In a gripping head adapted to pick up an ice cream cone stack from a container, the object of the invention is achieved in that the gripping head is provided with a pick-up means comprising a pick-up finger and a vacuum cup, where the pick-up finger is adapted to move from a start position, in which a tip of the pick-up finger is positioned adjacent a rim of an ice cream cone at the end region of the ice cream cone stack, to a pick-up position in which the tip of the pick-up finger extends into an ice cream cone, and where the vacuum cup is adapted to catch the first ice cream cone of the ice cream cone stack when the pick-up finger extends into an ice cream cone.

By this first embodiment of the gripping head according to the invention, a gripping head that can pick up a stack of ice cream cones from a container is provided. The gripping head can pick up the stack of ice cream cones in a gentle way, such that the ice cream cones are not damaged, and at the same time it is ensured that the complete stack of ice cream cones is picked up at the same time. The gripping head will pick up a stack of ice cream cones and move it to a receiving position, e.g. a magazine or an infeed station at a conveyor, where the ice cream cones will be removed one by one to an ice cream filling machine.

In the shown example, an ice cream cone comprises an outer ice cream cone wrapping paper and an empty ice cream cone waffle biscuit arranged in the wrapping paper. The gripping head is also suitable to pick up ice cream cones waffle biscuits alone, without the wrapping paper. The gripping head is mainly suitable for cone shaped objects that are not densely packed and that may have a slightly irregular shape, such that they can not be densely packed. The gripping head comprises at least one pick-up finger and a vacuum cup, in the shown example the gripping head comprises three pick-up fingers. The number of pick-up fingers depends among others on the length of the stack of ice cream cones and the weight of the ice cream cones. For a short stack, or light ice cream cones, one pick-up finger may suffice.

In the shown example, the gripping head is adapted to pick up several stacks of ice cream cones arranged beside each other, in the described example seven parallel rows of stacked ice cream cones. The ice cream cones are delivered in a container holding several layers of stacks, divided by divider boards. The rows of stacks may also be provided with separator boards of some kind, which are removed before the stacks are picked up. In order to line up the stacks of ice cream cones, the gripping head is may be provided with side walls arranged on each side of the gripping head. The side walls are moveable towards the centre of the gripping head by an actuator. The stacks of ice cream cones can thus be pushed together such that they lay in aligned and well defined rows of ice cream cones next to each other, such that they just or barely touch each other. In this way, the ice cream cones will be lined up with the pick-up means of the gripping head.

With the inventive gripping head, a stack of ice cream cones can be picked up without having access to the last ice cream cone of the stack, and without having to reach around the ice cream cones with a gripping tool. By using flexible pick-up fingers arranged along the stack of ice cream cones, at one or more positions, it is ensured that the stack is held securely by the gripping head. One pick-up finger is positioned at the end region of the stack, at about 3-5 ice cream cones from the last ice cream cone of the stack. More pick-up fingers may be arranged along the stack, at equidistant spacing between the pick-up fingers. In the shown example, three pick-up fingers are used, one at the end region, one at the mid region and one at the start region. A vacuum cup is used to hold the first ice cream cone of the stack. The vacuum cup prevents the ice cream cones below the lowest pick-up finger to slide of the stack when the stack is lifted.

When a stack of ice cream cones is to be picked up, the gripping tool is positioned above the stack of ice cream cones, with the pick-up fingers arranged adjacent a rim of an ice cream cone. The gripping head is then moved towards the start region of the stack, with a distance somewhat longer than the distance between two ice cream cones in a stack. This will ensure that each pick-up finger can extend into one ice cream cone. The movement may be performed in one plane, parallel to the bearing plane of the container, or may also be slightly downwards with an angle corresponding to the angel of an ice cream cone. When the pick-up fingers extend into the ice cream cones, the vacuum cup is lowered towards the first ice cream cone. The pressure in the vacuum cup is evacuated such that the vacuum cup holds the first ice cream cone. The stack can now be lifted and moved to a receiving position, where the stack is released in a corresponding manner. The stack is placed on the receiving surface, the low pressure is released from the vacuum cup and the gripping head moves slightly towards the end of the stack to release the ice cream cones from the pick-up fingers. The receiving position may e.g. comprise a magazine in which the ice cream cones are placed.

In a method for moving a stack of ice cream cones from a container to a receiving position, the steps of: positioning a gripping head in a predefined position above the stack of ice cream cones, moving a pick-up finger from a start position adjacent a rim of an ice cream cone to a position in which the pick-up finger extends into the ice cream cone, gripping the first ice cream cone in the stack of ice cream cones with a vacuum cup, lifting the stack of ice cream cones with the gripping head, and placing the stack of ice cream cones at a receiving position are disclosed.

By this first embodiment of the method according to the invention, a stack of ice cream cones can be picked up and moved in an easy and reliable manner.

### BRIEF DESCRIPTION OF DRAWINGS

The invention will be described in greater detail in the following, with reference to the embodiments that are shown in the attached drawings, in which
- Fig. 1: shows a schematic view of a system according to the invention in an initial state,
- Fig. 2: shows a schematic view of a system according to the invention in a pick-up state,
- Figs. 3a-3b: show a top view of a gripping head according to the invention,
- Figs. 4a-4c: show a side view of a gripping head according to the invention,
- Figs. 5a-5b: show a detail of a gripping head according to the invention,
- Fig. 6: shows a schematic view of a system according to the invention in a moving state,
- Fig. 7: shows a schematic view of a system according to the invention in a release state, and
- Fig. 8: shows a flow chart of an example of a method according to the invention.

### MODES FOR CARRYING OUT THE INVENTION

The embodiments of the invention with further developments described in the following are to be regarded only as examples and are in no way to limit the scope of the protection provided by the patent claims. Reference to directions such as vertical, horizontal etc. are related to normal earth plane directions, i.e. the floor of a production plant is horizontal.

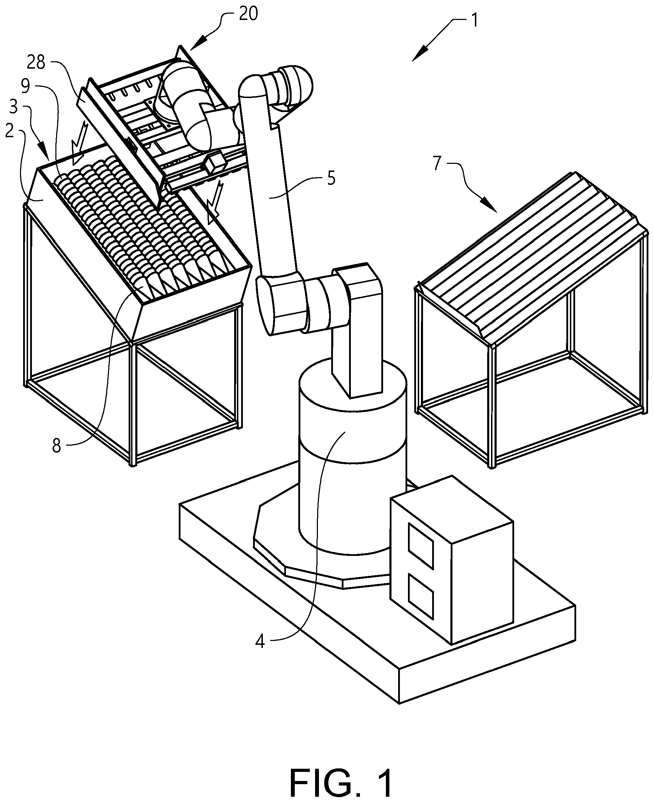

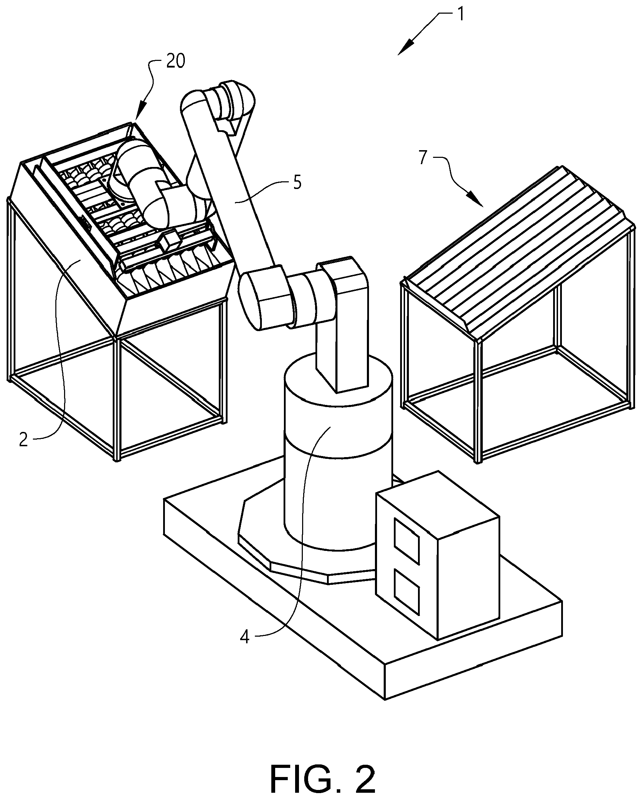

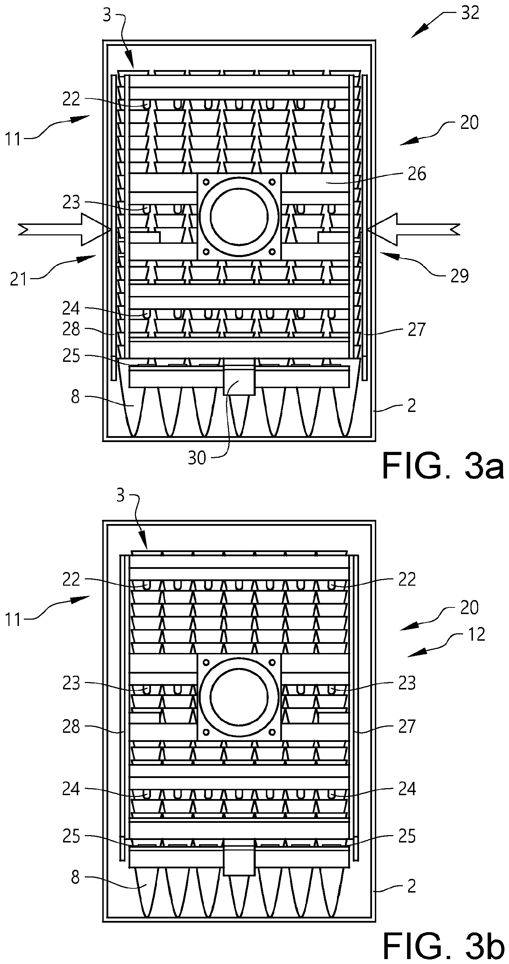

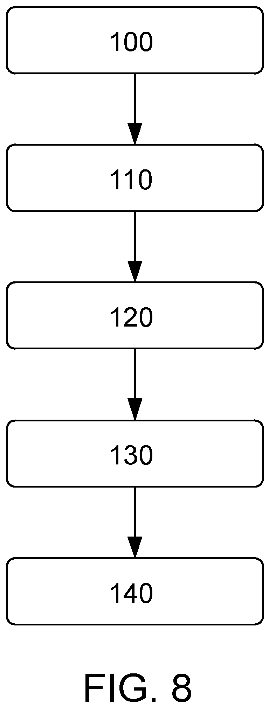

Figs. 1, 2, 6 and 7 show a system according to the invention, Figs. 3 to 5 show a gripping head according to the invention, and Fig. 8 shows the method steps according to the invention. The system 1 comprises a robot 4 provided with a gripping head 20. The robot may be a standard industrial robot having a robot arm 5 that can be moved in any direction, and is in the described example a collaborate robot that does not require a protection cage. The arm is provided with a gripping head 20 that is adapted to pick up and move a stack of ice cream cones by using a pick-up means 21 comprising one or more pick-up fingers and a vacuum cup. The gripping head may be provided with safety sensors that will detect if the gripping head comes close to or hits something and will in this case stop the robot. The robot may be arranged at an infeed region of a conveyor having a receiving position 7, where the robot can deliver ice cream cones to the work flow of an ice cream filling machine. In Fig. 1, the system is shown in an initial state, and in Fig. 2, the system is shown in a pick-up state, where the gripping head is positioned just above the stacks of ice cream cones that are to be picked up.

In the shown example, the gripping head 20 is adapted to pick up several stacks 3 of ice cream cones 9 arranged beside each other, in the described example seven parallel rows of stacked ice cream cones. The stacks of ice cream cones are arranged in a container 2 holding several layers of stacks of ice cream cones, divided by divider boards. Each layer holds a predefined number of ice cream cone stacks. The stacks may also be separated sideways with separator boards of some kind during transportation, which in this case are removed before the stacks are picked up. In the shown example, the container is angled somewhat, e.g. between 10 - 30 degrees, in order to ensure that the beginning of the stacks of ice cream cones are always positioned in the same position, with the first ice cream cone bearing on a side wall of the container.

In order to line up the stacks of ice cream cones 3, the gripping head 20 is provided with side walls 27, 28 arranged on each side of the gripping head. The side walls are moveable towards the centre of the gripping head by an actuator 29. The stacks of ice cream cones are pushed towards each other such that they lay in aligned and well-defined rows of ice cream cones next to each other, such that they just or barely touch each other. Fig. 3a shows the stacks of ice cream cones before they are lined up, and Fig. 3b shows the stacks of ice cream cones lined up in well-defined rows in the container, where the side walls have pushed the ice cream cones towards each other by the actuator 29. The actuator may e.g. be an air cylinder or an electromagnetic actuator. The actuator may have two positions, a start position in which the side walls are as far away from each other as possible, but will still fit in the container, and an end position, in which the stacks of ice cream cones are lined up. Since the width of an ice cream cone is known, the end position is preferably a predefined and fixed position. If the container holds the ice cream cones in a well-defined manner, the side walls may not be necessary, i.e. if the divider board dividing the layers of ice cream cones is provided with specific positioning walls.

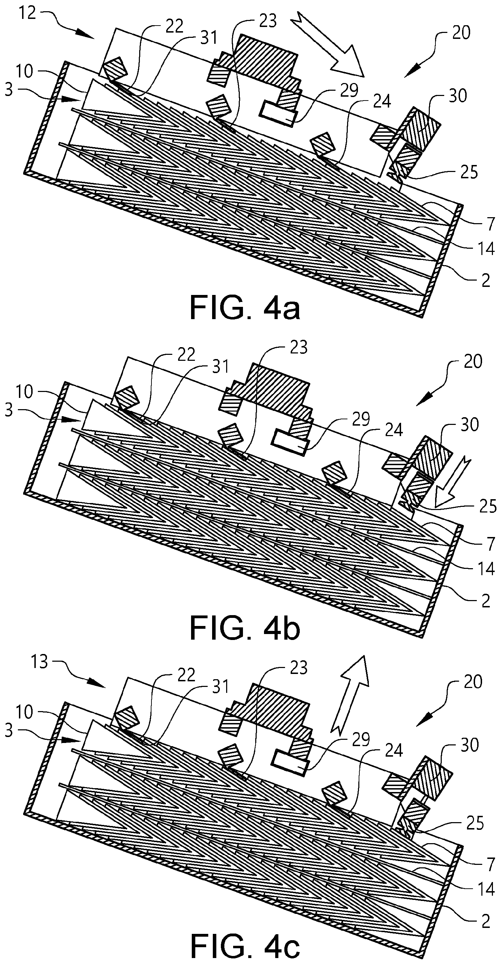

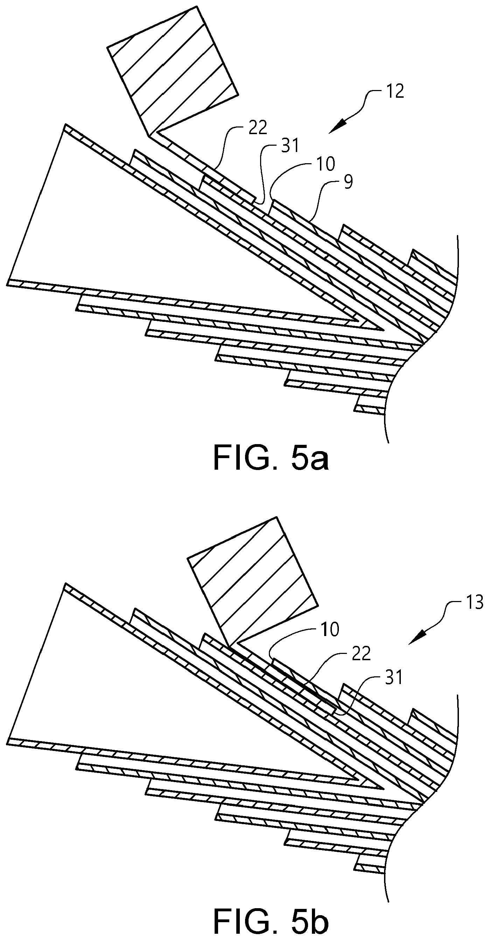

When the ice cream cones are aligned, each row or stack of ice cream cones will be aligned with the pick-up fingers 23, 24, 25 of the gripping head. An example of a situation where the ice cream cones are aligned with the pick-up fingers are shown in Figs. 3b, 4a and 5a. The pick-up head is now in a start position 12, and will move a small amount towards the beginning of the stack of ice cream cones, i.e. towards the first ice cream cone 7 and to the pick-up position 13. This movement may be parallel to the bearing plane 14 of the container. In this movement, the pick-up fingers 22, 23, 24 will, since they are positioned adjacent a rim 10 of an ice cream cone, catch a rim of an ice cream cone and will extend into that ice cream cone. The pick-up fingers are preferably flexible such that they catch a rim more easily and such that they do not damage the rim or the ice cream cone. A pick-up finger may e.g. be made from a plastic film or a thin metal sheet. The movement may also at the same time be somewhat downwards, where the gripping head is moved downwards with an angle corresponding to the angle of an ice cream cone, i.e. the movement is parallel to the side of an ice cream cone. This will facilitate a pick-up finger to catch a rim of an ice cream cone. The length of the movement preferably corresponds to the distance between two ice cream cones, or is slightly longer. In this way, it is ensured that each pick-up finger will catch a rim of an ice cream cone and that the ice cream cones are not damaged by an over-travel of the pick-up fingers. This position is shown in Figs. 4b and 5b.

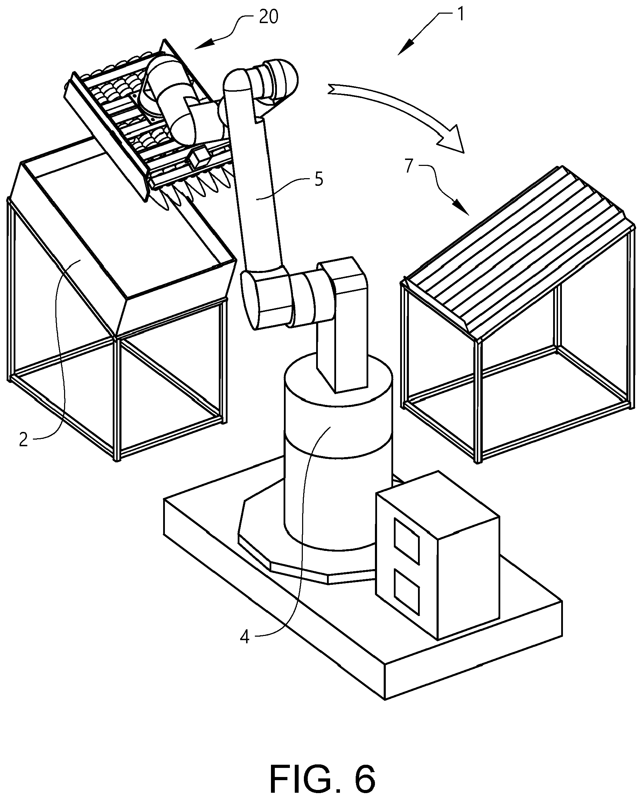

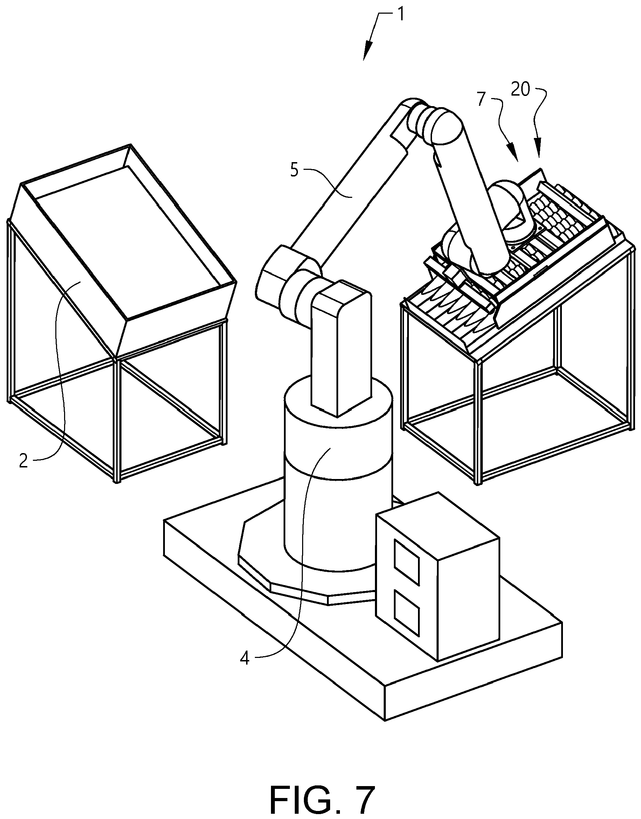

When the pick-up fingers have caught the ice cream cones, the vacuum cup 25 is lowered by a horizontal actuator 30. The actuator may be an air-actuated cylinder or an electric actuator. The actuator may, since the shape and size of the ice cream cones is known, have two fixed positions, a start position and an end position. When the vacuum cup bears on the first ice cream cone, an underpressure is applied to the vacuum cup such that the vacuum cup holds the first ice cream cone 7, and the gripping head is in the pick-up position 13, shown in Fig. 4c. The stack of ice cream cones is now held securely by the pick-up head and can be lifted and moved to a receiving position. This is shown in Fig. 6, where the stacks of ice cream cones are lifted by the gripping head, and in Fig. 7, where the stacks of ice cream cones are placed at the receiving position 7. The receiving position may e.g. comprise a magazine in which the ice cream cones are placed. The magazine may be positioned at a conveyor, where the ice cream cones will be picked up one by one to an ice cream filling machine.

In the method for moving a stack of ice cream cones from a container to a receiving position, the following steps are comprised.

In a first step 100, the gripping head is positioned in a predefined position above the stack of ice cream cones. The position of the gripping head is preferably a predefined position, based on a predefined position of the container holding the ice cream cones, but could also be determined by the use of optical detection means, e.g. a vision system having a camera.

In a second step 110, a pick-up finger is moved from a start position adjacent a rim of an ice cream cone to a position in which the pick-up finger extends into the ice cream cone. The pick-up finger is preferably moved by the gripping head, but is would also be possible to mount the pick-up finger on a specific actuator that moves the pick-up finger when the gripping head stands still. Depending on the length of the stack of ice cream cones, more than one pick-up finger may be used, arranged along the stack of ice cream cones. One advantage of using pick-up fingers that grip ice cream cones at different positons of the stack of ice cream cones is that no access is required to the top ice cream cone in a stack. This simplifies the pick up of ice cream cones.

In step 120, the first ice cream cone in the stack of ice cream cones is gripped with a vacuum cup. The vacuum cup is arranged on an actuator that moves the vacuum cup down towards the first ice cream cone, where it holds the first ice cream cone by an underpressure.

In step 130, the stack of ice cream cones is lifted with the gripping head from the container. The container is preferably arranged with an inclination, and the ice cream cones are preferably also lifted and moved with an inclination, such that the ice cream cones are safely moved without the risk that any of the top ice cream cones in a stack falls out of the stack.

In step 140, the stack of ice cream cones is placed at the receiving position. The receiving position may be a magazine or a stand holding the ice cream cones for later use in an ice cream filling machine.

A further step of arranging the stack of ice cream cones centrally under the gripping head by moving two side walls towards the centre of the gripping head may also be included, depending on how the ice cream cones are arranged in the container. In one example, the ice cream cones are arranged on a flat divider board, where it is of advantage to align the stack or stacks of ice cream cones to a predefined position relative the gripping head. If the stack of stacks of ice cream cones are arranged in slots holding the ice cream cones in well-defined positions, this step is not necessary.

The invention is not to be regarded as being limited to the embodiments described above, a number of additional variants and modifications being possible within the scope of the subsequent patent claims.

### REFERENCE SIGNS

- 1:: System
- 2:: Container
- 3:: Ice cream cone stack
- 4:: Robot
- 5:: Robot arm
- 7:: Receiving position
- 8:: First ice cream cone
- 9:: Ice cream cone
- 10:: Rim
- 11:: End region of stack
- 12:: Start position
- 13:: Pick-up position
- 14:: Bearing plane

- 20:: Gripping head
- 21:: Pick-up means
- 22:: First pick-up finger
- 23:: Second pick-up finger
- 24:: Third pick-up finger
- 25:: Vacuum cup
- 26:: Frame
- 27:: First sidewall
- 28:: Second sidewall
- 29:: Lateral actuator
- 30:: Horizontal actuator
- 31:: Tip of pick-up finger
- 32:: First position of side walls

## Claims

1. Gripping head adapted to pick up an ice cream cone stack (3) from a container (2), **characterized in that** the gripping head (20) is provided with a pick-up means (21) comprising a pick-up finger (22; 23; 24) and a vacuum cup (25), where the pick-up finger is adapted to move from a start position (12), in which a tip (31) of the pick-up finger is positioned adjacent a rim (10) of an ice cream cone (9) at the end region (11) of the ice cream cone stack (3), to a pick-up position (13) in which the tip (31) of the pick-up finger (22; 23; 24) extends into an ice cream cone (9), and where the vacuum cup (25) is adapted to catch the first ice cream cone (8) of the ice cream cone stack (3) when the pick-up finger extends into an ice cream cone (9).

2. Gripping head according to claim 1, **characterized in that** the gripping head (20) comprises two parallel side walls (27, 28) arranged at each side of the gripping head, where the side walls are adapted to move from a first position (32) spaced apart from the stack of ice cream cones (3) to a position in which the side walls (27, 28) bears on both sides of the stack (3).

3. Gripping head according to claim 1 or 2, **characterized in that** the gripping head comprises a plurality of pick-up fingers (22, 23, 24) arranged along the gripping head (20).

4. Gripping head according to any one of claims 1 to 3, **characterized in that** the pick-up fingers (22, 23, 24) are flexible.

5. Gripping head according to any one of claims 1 to 4, **characterized in that** the gripping head is adapted to move in a direction parallel to the bearing plane (14) of the container (2) when it moves from the start position (12) to the pick-up position (13).

6. Gripping head according to any one of claim 5, **characterized in that** the gripping head (20) is adapted to also move in a direction towards the bearing plane (14) of the container (2) when it moves from the start position (12) to the pick-up position (13).

7. Gripping head according to claim 6, **characterized in that** the movement of the gripping head (20) is parallel to a side wall of an ice cream cone (9).

8. Gripping head according to any one claims 1 to 7, **characterized in that** each ice cream cone (9) comprises an ice cream cone wrapper and an empty ice cream cone waffle biscuit.

9. A system (1) for moving an ice cream cone stack (3) from a container (2) to a receiving position (7), **characterized in that** the system comprises an industrial robot (4) provided with a gripping head (20) according to any of the preceding claims.

10. A method for moving a stack of ice cream cones from a container to a receiving position, said method comprising the steps of:
- positioning a gripping head in a predefined position above the stack of ice cream cones,
- moving a pick-up finger from a start position adjacent a rim of an ice cream cone to a position in which the pick-up finger extends into the ice cream cone,
- gripping the first ice cream cone in the stack of ice cream cones with a vacuum cup,
- lifting the stack of ice cream cones with the gripping head, and
- placing the stack of ice cream cones at a receiving position.

11. The method according to claim 10, **characterized in that** the method further comprises the step of: arranging the stack of ice cream cones centrally under the gripping head by moving two side walls towards the centre of the gripping head.

12. The method according to claim 10 or 11, **characterized in that** the method is adapted to move a plurality of stacks of ice cream cones by the use of a gripping head comprising a plurality of pick-up fingers and a plurality of vacuum cups.
